# FASCICULE DE BREVET EUROPEEN

(11) **EP 3 009 305 B1**
(45) Date de publication et mention de la délivrance du brevet: **11.04.2018**
(21) Numéro de dépôt: 15189213.0
(22) Date de dépôt: 09.10.2015
(51) Int. Cl.: B60R 19/18

(54) **POUTRE DE PARE-CHOCS AUTOMOBILE**
AUTOMOBIL-STOSSFÄNGER
AUTOMOBILE BUMPER BEAM

(30) Priorité: 13.10.2014 FR 1402298
(43) Date de publication de la demande: 20.04.2016
(73) Titulaire: Constellium Singen GmbH, 78224 Singen (DE)
(72) Inventeur: LANGE, Christian, 8224 LOHNINGEN (CH)
(74) Mandataire: Constellium - Propriété Industrielle

(56) Documents cités:
- EP-A2- 1 433 665
- WO-A2-2005/018995

## Description

L'invention concerne un dispositif d'absorption de chocs, plus particulièrement une poutre transversale de pare-chocs (avant ou arrière) d'un véhicule automobile. Celle-ci comporte typiquement deux longerons formant un brancard, chaque longeron étant généralement constitué d'une pièce soudée sur toute sa longueur et servant de support à la poutre de pare-chocs.

Dans les structures d'absorption de chocs un absorbeur de chocs, également appelé "crash-box", est fréquemment intercalé entre les extrémités de chaque longeron et la poutre transversale de pare-chocs, afin de protéger la structure du brancard en cas de choc à faible vitesse. Le crash-box est une pièce déformable associée à la poutre transversale du pare-chocs pour former un dispositif d'absorption de chocs à faible vitesse, appelé également "Crash Management System" (CMS).

En pratique, lors d'un choc frontal à une vitesse inférieure à quatre kilomètres/heure, le pare-chocs et les crash-boxes se déforment dans le domaine élastique et reprennent leur position initiale sans détérioration. Lors d'un choc à une vitesse supérieure à quatre kilomètres/heure, le pare-chocs et les crash-boxes subissent une déformation plastique qui permet d'absorber au moins en partie l'énergie du choc. Lorsque le choc s'effectue à une vitesse restant inférieure à quinze kilomètres/heure environ, l'énergie ainsi absorbée permet de préserver le reste de la structure du véhicule (seuil de réparabilité). Au-delà, lors de chocs à une vitesse supérieure à quinze kilomètres/heure, la structure du brancard est endommagée et les coûts de réparation qui en découlent sont élevés.

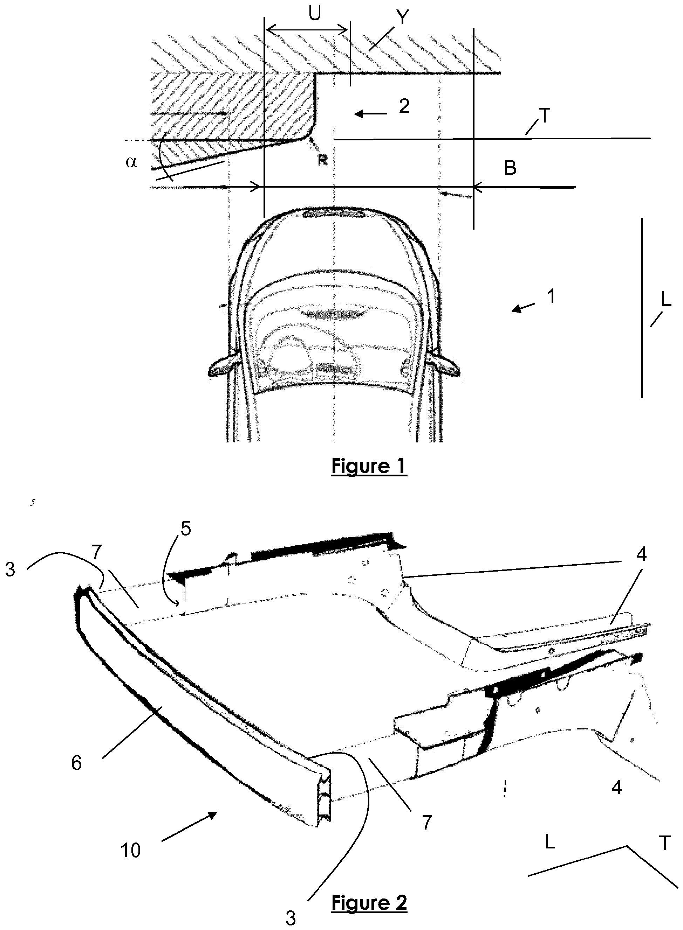

Des protocoles de "crash tests" ont été définis par les constructeurs automobiles et les assureurs afin d'améliorer les conditions de sécurité imposées aux véhicules. Initialement, ces tests simulaient des chocs frontaux, c'est-à-dire des chocs engendrant des efforts parfaitement longitudinaux. Récemment, ces "crash tests", notamment Euro-NCAP ou RCAR, suivent un protocole (cf. par exemple "RCAR Low-speed structural crash test protocol" - Issue 2.2 July 2011) dans lequel le choc n'est plus parfaitement frontal mais décalé: comme illustré sur la figure 1, le véhicule (1) soumis au test est projeté contre un obstacle (2) placé du côté du conducteur de telle sorte qu'il offre un obstacle sur plus de 40% de la largeur du véhicule (U > 0,4 * B) et fait un angle (α) de 10° par rapport à l'axe transversal (T) perpendiculaire à l'axe longitudinal (L) du véhicule. Le plan de symétrie (Y) du véhicule est également représenté.

Les nouveaux protocoles d'essais de chocs EuroNCAP et RCAR imposent des chocs qui ne sont plus purement frontaux mais impliquent la présence d'efforts transversaux et de couples agissant sur l'absorbeur. Les nouvelles conditions de ces tests augmentent le risque d'instabilité élastique de type flambage de l'absorbeur. Lorsque le flambement se traduit par un pivotement de l'absorbeur dans un plan horizontal, on parle de « mise en biais ». Lorsque le flambement se traduit par un pivotement de l'absorbeur dans un plan vertical, on parle de « verticalisation ».

Récemment, on a mis l'accent sur la situation d'accidents se produisant avec un décalage vertical, c'est à dire les poutres transversales de pare-chocs de deux véhicules se situent à différents niveaux verticaux au cours de l'accident. Ce type de choc peut être appelé choc à recouvrement partiel. Les dommages causés aux véhicules dans ces types de situations d'accident peuvent être très coûteux à réparer, même lorsque la collision s'est produite à basse vitesse. En outre, l'introduction et la popularité des VUS (véhicules utilitaires sport) a augmenté la fréquence de ce type d'accidents. Pour ce type de choc, on s'attache en particulier à limiter l'intrusion de la poutre transversale dans le véhicule, en effet même des chocs à faible vitesse peuvent avoir une grande importance économique s'ils nécessitent la réparation du radiateur, de la climatisation ou d'autres composants vulnérables situés à l'extrémité avant du véhicule.

De nombreux types de poutres transversales de pare-chocs sont connues. Les brevets US 5,727,826 ou EP 0 718 157 décrivent des poutres de pare-chocs présentant une partie déformation primaire placée à l'avant et une partie de déformation secondaire placée à l'arrière. La demande de brevet WO2012/100909 décrit une poutre transversale de pare-chocs comprenant deux zones de faiblesse symétriques par rapport au plan de symétrie. La demande US2011/0095549 décrit une poutre de pare-chocs ayant au moins une partie dont la coupe transversale est inclinée ou courbée, particulièrement adaptée au cas où les poutres transversales de pare-chocs de deux véhicules se situent à différents niveaux verticaux au cours de l'accident. Cette solution est difficile à mettre en oeuvre car elle nécessite des opérations de mise en forme complexe, de plus elle n'est pas satisfaisante du point de vue mécanique. Le document WO2005/018995A montre une poutre transversal de pare-chocs d'après le préambule de la revendication 1. Le document EP1433665A montre une poutre transversale de pare-chocs présentant des parois, une paroi avant et une paroi arrière qui sont espacées d'une certaine distance, et une paire de parois transversales, qui joignent lesdites parois avant et arrière pour former une section creuse et une entretoise disposée entre les parois transversales reliant lesdites parois avant et arrière et divisant le profilé creux en deux chambres, une chambre supérieure et une chambre inférieure qui s'étendent entre les parois, où la section de l'une desdites chambres est plus grande que la section de l'autre chambre; ladite paroi avant fermant la chambre dont la section est la plus grande est décalée horizontalement dans la direction de l'obstacle par rapport à la partie de ladite paroi avant fermant la chambre dont la section est la plus petite.

Le problème que cherche à résoudre la présente invention est d'améliorer le comportement des poutres transversales de pare-chocs lors de la collision de deux véhicules dont les pare-chocs se situent à différents niveaux verticaux au cours de l'accident.

Un premier objet de l'invention est une poutre transversale de pare-chocs pour véhicules comprenant un profilé extrudé en alliage d'aluminium qui peut être fixé au véhicule et présente des parois, une paroi avant et une paroi arrière qui sont espacées d'une certaine distance, et une paire de parois transversales, qui joignent lesdites parois avant et arrière pour former une section creuse et une entretoise disposée entre les parois transversales reliant lesdites parois avant et arrière et divisant le profilé creux en deux chambres, une chambre supérieure et une chambre inférieure qui s'étendent entre les parois, où la section de l'une desdites chambres est plus grande que la section de l'autre chambre ; ladite paroi avant fermant la chambre dont la section est la plus grande est décalée horizontalement dans la direction de l'obstacle par rapport à la partie de ladite paroi avant fermant la chambre dont la section est la plus petite ; et où le rapport entre la hauteur H de ladite poutre transversale et le décalage horizontal Δ est compris entre 10 et 50 et de préférence entre 15 et 30.

Un autre objet de l'invention est une structure d'absorption de chocs pour véhicule automobile comprenant une poutre transversale selon l'invention.

Dans le cadre de l'invention, le terme «avant» désigne le sens de l'avant du véhicule et le terme « arrière » désigne le sens de l'arrière du véhicule. Le terme « inférieur » désigne le sens du sol et le terme « supérieur » désigne le sens du ciel. Ainsi la chambre inférieure est localisée plus près du sol que la chambre supérieure.

Selon l'invention une poutre transversale de pare-chocs constituée de deux chambres, une chambre supérieure et une chambre inférieure caractérisée en ce que la section de l'une desdites chambres est plus grande que la section de l'autre chambre permet lors d'un choc à recouvrement partiel de limiter l'intrusion de la poutre transversale dans le véhicule. Typiquement la section de la chambre ayant la plus grande section est au moins 3% et de préférence au moins 5% supérieure à la section de la chambre ayant la section la plus faible. Selon l'invention, il est avantageux que la chambre ayant la plus grande section ne soit pas directement en contact avec l'obstacle lors d'un choc avec recouvrement partiel. Ainsi dans un premier mode de réalisation, destiné en particulier aux véhicules hauts, par exemple de type VUS dont le pare-chocs risque fréquemment de heurter un véhicules plus bas et donc de subir un choc à recouvrement partiel dans lequel seule la partie inférieure du pare-chocs entre en contact avec l'obstacle, la chambre ayant la plus grande section est la chambre supérieure. Dans le second mode de réalisation destiné en particulier aux véhicules bas, par exemple de type voiture de sport dont le pare-chocs risque fréquemment de heurter un véhicules plus haut et donc de subir un choc à recouvrement partiel dans lequel seule la partie supérieure du pare-chocs entre en contact avec l'obstacle, la chambre ayant la plus grande section est la chambre inférieure.

La poutre transversale selon l'invention est un profilé extrudé en alliage d'aluminium, de préférence de la série 6xxx. Le profilé extrudé est obtenu par filage puis mis en forme. Avantageusement la forme générale dudit profilé extrudé est rectangulaire. Avantageusement la paroi arrière de la poutre transversale est essentiellement plane.

La partie de ladite paroi avant fermant la chambre dont la section est la plus grande est décalée horizontalement, dans la direction longitudinale et dans le sens de l'obstacle par rapport à la partie de ladite paroi avant fermant la chambre dont la section est la plus petite, conférant ainsi une plus grande largeur à la chambre dont la section est la plus grande. De préférence ledit décalage horizontal est situé sensiblement au niveau de ladite entretoise. Ainsi la partie de ladite paroi avant fermant la chambre dont la section est la plus grande peut avoir une forme générale de C dont la branche inférieure est reliée à l'entretoise. Le rapport entre la hauteur H de ladite poutre transversale et ledit décalage horizontal Δ est compris entre 10 et 50 et de préférence entre 15 et 30. Typiquement pour une hauteur H de 100 mm ledit décalage horizontal Δ est de l'ordre de 5 mm.

Préférentiellement, la poutre transversale de pare-chocs selon l'invention est sensiblement symétrique par rapport à un plan de symétrie du véhicule et globalement orientée dans une direction perpendiculaire au plan de symétrie et elle comporte deux zones de fixation destinées à être connecté à deux des parties de support de la structure de l'automobile, qui sont disposées symétriquement par rapport au plan de symétrie.

Avantageusement, la poutre transversale de pare-chocs selon l'invention est telle que la section transversale dudit profilé extrudé varie selon une fonction monotone de la distance par rapport au plan de symétrie, sur la majeure partie de sa longueur entre lesdites zones de fixation.

L'invention concerne également une structure d'absorption de chocs pour véhicule automobile comprenant une poutre transversale selon l'invention. Avantageusement la structure d'absorption de chocs selon l'invention est caractérisée en ce que ladite poutre transversale de pare-chocs selon l'invention est connectée à la structure automobile par des absorbeurs de chocs.
La figure 1 illustre une vue de dessus représentant les conditions d'essais relatives à un test de choc sensiblement frontal, décalé (figure tirée de "RCAR Low-speed structural crash test protocol (Appendix I)").
La figure 2 représente une vue en perspective d'une structure avant de véhicule munie d'une structure d'absorption de chocs.
La figure 3 représente la coupe d'une poutre transversale de pare-chocs selon l'art antérieur.
La figure 4 représente la coupe d'une poutre transversale de pare-chocs selon le premier mode de réalisation de l'invention.
La figure 5 représente la coupe d'une poutre transversale de pare-chocs selon le second mode de réalisation de l'invention.
La figure 6 représente la coupe d'une poutre transversale de pare-chocs selon le premier mode de réalisation de l'invention et illustre les paramètres H et Δ.

### MODES DE REALISATION DE L'INVENTION

La figure 1 permet de visualiser les directions et plans référencés dans le cadre de l'invention, notamment la direction longitudinale (L), la direction transversale (T) et le plan de symétrie du véhicule (Y).

Une structure avant de véhicule est illustrée en figure 2. Elle comprend deux des parties de support (4) de la structure de l'automobile, typiquement des longerons, qui supportent ensemble une poutre transversale de pare-chocs (6). La structure d'absorption de chocs résulte de l'assemblage de ladite poutre de pare-chocs au niveau de la zone de fixation (3) et de deux absorbeurs de chocs (7). Elle est positionnée sur la structure avant du véhicule de telle sorte que chaque absorbeur se trouve intercalé entre un longeron et ladite poutre transversale de pare-chocs.

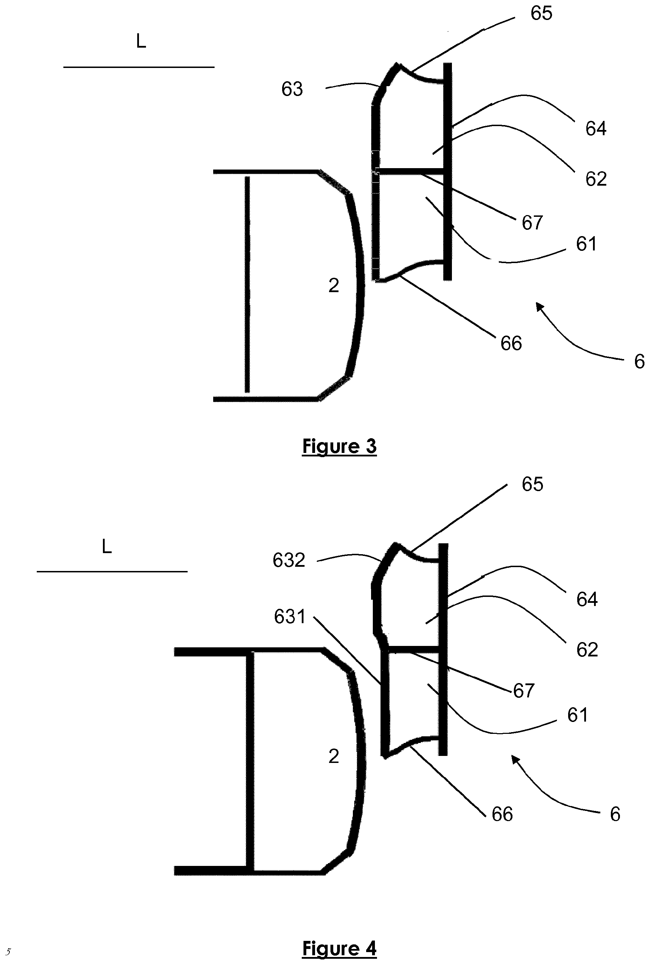

La figure 3 illustre une poutre transversale de pare chocs selon l'art antérieur. La poutre transversale (6) présente des parois, une paroi avant (63) et une paroi arrière (64) qui sont espacées d'une certaine distance, et une paire de parois transversales (65, 66), qui joignent lesdites parois avant et arrière pour former une section creuse et une entretoise (67) disposée entre les parois transversales reliant lesdites parois avant et arrière et divisant le profilé creux en deux chambres, une chambre supérieure (62) et une chambre inférieure (61) qui s'étendent entre les parois, ces deux chambres étant essentiellement symétriques par rapport à l'entretoise et ayant une section sensiblement égale. La poutre transversale est représentée dans le cadre d'un choc à recouvrement partiel avec un obstacle (2).

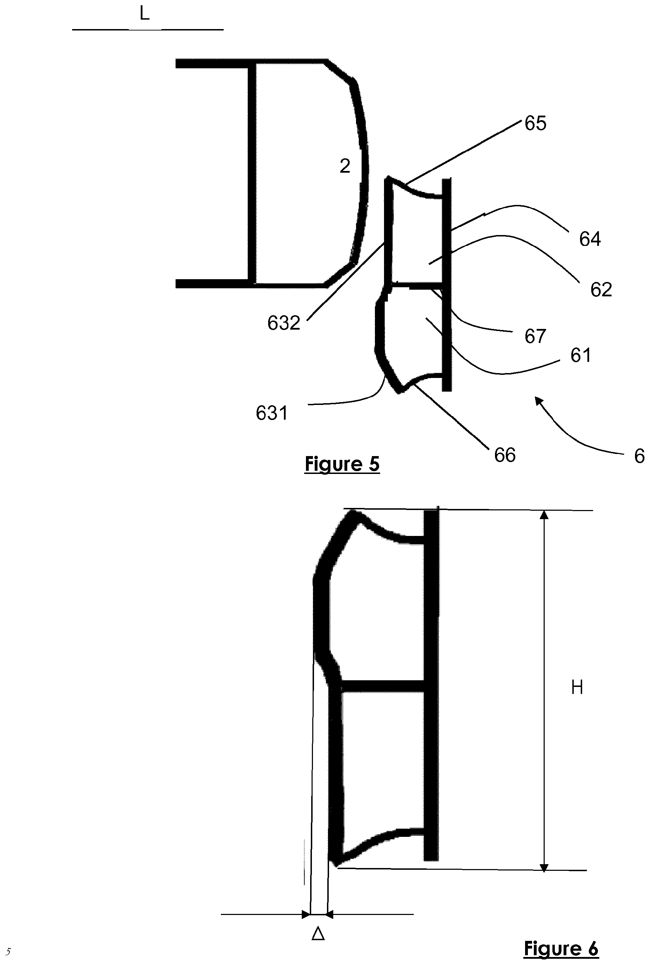

La figure 4 illustre une poutre transversale de pare chocs selon le premier mode de réalisation de l'invention. La poutre transversale (6) présente une chambre supérieure (62) dont la section est plus grande que la section de la chambre inférieure (61). La partie de la paroi avant (632) fermant la chambre supérieure est décalée horizontalement dans la direction de l'obstacle (2) par rapport à la partie de ladite paroi avant fermant à la chambre inférieure (631). Le décalage horizontal est situé sensiblement au niveau de l'entretoise (67), elle-même située à environ mi-distance entre la paroi supérieure (65) et la paroi inférieure (66). La figure 6 illustre la hauteur H de la poutre transversale et le décalage horizontal Δ, le rapport entre la hauteur H de la poutre transversale et le décalage horizontal Δ dans ce mode de réalisation est d'environ 20.

La figure 5 illustre une poutre transversale de pare chocs selon le second mode de réalisation de l'invention. La poutre transversale (6) présente une chambre inférieure (61) dont la section est plus grande que la section de la chambre supérieure (62). La partie de la paroi avant (631) fermant la chambre inférieure est décalée horizontalement dans la direction de l'obstacle (2) par rapport à la partie de ladite paroi avant fermant à la chambre supérieure (632). Le décalage horizontal est situé au sensiblement niveau de l'entretoise (67), elle-même située à environ mi-distance entre la paroi supérieure (65) et la paroi inférieure (66).

### EXEMPLE

On a obtenu la distance d'intrusion lors d'un choc avec recouvrement partiel de 50% tel qu'illustré par les Figures 3 et 4. La hauteur H de la poutre transversale était de 100 mm. Le décalage horizontal Δ de la poutre transversale selon l'invention illustrée par les Figures 4 et 6 était de 5 mm. Le choc était obtenu avec une vitesse de 10 km/h. L'intrusion de la poutre transversale était de 102 mm pour la poutre transversale selon l'invention alors qu'elle était de 108 mm pour la poutre transversale selon l'art antérieur.

## Revendications

1. Poutre transversale de pare-chocs (6) pour véhicules comprenant un profilé extrudé en alliage d'aluminium qui peut être fixé au véhicule et présente des parois, une paroi avant (63) et une paroi arrière (64) qui sont espacées d'une certaine distance, et une paire de parois transversales (65, 66), qui joignent lesdites parois avant et arrière pour former une section creuse et une entretoise (67) disposée entre les parois transversales reliant lesdites parois avant et arrière et divisant le profilé creux en deux chambres, une chambre supérieure (62) et une chambre inférieure (61) qui s'étendent entre les parois, où la section de l'une desdites chambres est plus grande que la section de l'autre chambre ; ladite paroi avant fermant la chambre dont la section est la plus grande (631 ou 632) est décalée horizontalement dans la direction de l'obstacle par rapport à la partie de ladite paroi avant fermant la chambre dont la section est la plus petite (632 ou 631) ; caractérisé et en ce que le rapport entre la hauteur H de ladite poutre transversale et ledit décalage horizontal Δ est compris entre 10 et 50.

2. Poutre transversale selon la revendication 1 **caractérisée en ce que** ledit décalage horizontal est situé sensiblement au niveau de ladite entretoise (67).

3. Poutre transversale de pare-chocs selon la revendication 1 ou la revendication 2 **caractérisée en ce que** le rapport entre la hauteur H de ladite poutre transversale et ledit décalage horizontal Δ est compris entre 15 et 30.

4. Poutre transversale de pare-chocs selon une quelconque des revendications 1 à 3 **caractérisée en ce que** la dite entretoise (67) est située à environ mi-distance entre ladite paroi supérieure (65) et la dite paroi inférieure (66).

5. Poutre transversale de pare-chocs selon une quelconque des revendications 1 à 4 **caractérisée en ce que** la forme générale dudit profilé extrudé est rectangulaire.

6. Poutre transversale de pare-chocs selon une quelconque des revendications 1 à 5 **caractérisée en ce qu'**elle est sensiblement symétrique par rapport au plan de symétrie du véhicule (Y) et globalement orientée dans une direction (T) perpendiculaire au plan de symétrie (Y), et **en ce qu'**elle comporte deux zones de fixation (3) destinées à être connectées à deux des parties de support (4) de la structure de l'automobile, qui sont disposées symétriquement par rapport au plan de symétrie (Y).

7. Poutre transversale de pare-chocs selon une quelconque des revendications 1 à 6 **caractérisée en ce que** la section transversale dudit profilé extrudé varie selon une fonction monotone de la distance par rapport au plan de symétrie (Y), sur la majeure partie de sa longueur entre lesdites zones de fixation (3).

8. Structure d'absorption de chocs pour véhicule automobile comprenant une poutre transversale selon une quelconque des revendications 1 à 7.

9. Structure d'absorption de chocs selon la revendication 8 **caractérisée en ce que** ladite poutre transversale (6) est connectée à ladite structure automobile (4) par des absorbeurs de chocs (7).

## Patentansprüche

1. Stoßfänger-Querträger (6) für Fahrzeuge, umfassend ein am Fahrzeug befestigbares Strangpressprofil aus Aluminiumlegierung mit Wänden, einer Vorderwand (63) und einer Rückwand (65), welche in einem bestimmten Abstand voneinander angeordnet sind, und einem Paar Querwände (65, 66), welche die Vorder- und Rückwand miteinander verbinden, um einen hohlen Abschnitt zu bilden, und mit einem Steg (67), der zwischen den die Vorder- und Rückwand verbindenden Querwänden angeordnet ist und das Hohlprofil in zwei Kammern unterteilt, eine obere Kammer (62) und eine untere Kammer (61), die sich zwischen den Wänden erstrecken, wobei der Querschnitt einer der Kammern größer ist als der Querschnitt der anderen Kammer; wobei die Vorderwand, welche die Kammer mit dem größeren Querschnitt (631 oder 632) abschließt, gegenüber dem Abschnitt der Vorderwand, welche die Kammer mit dem kleineren Querschnitt (632 oder 631) abschließt, horizontal in Richtung des Hindernisses versetzt ist; **dadurch gekennzeichnet, dass** das Verhältnis zwischen der Höhe H des Querträgers und dem horizontalen Versatz Δ zwischen 10 und 50 beträgt.

2. Querträger nach Anspruch 1, **dadurch gekennzeichnet, dass** sich der horizontale Versatz im Wesentlichen im Bereich des Stegs (67) befindet.

3. Stoßfänger-Querträger nach Anspruch 1 oder Anspruch 2, **dadurch gekennzeichnet, dass** das Verhältnis zwischen der Höhe H des Querträgers und dem horizontalen Versatz Δ zwischen 15 und 30 beträgt.

4. Stoßfänger-Querträger nach irgendeinem der Ansprüche 1 bis 3, **dadurch gekennzeichnet, dass** sich der Steg (67) etwa in der Mitte zwischen der oberen Wand (65) und der unteren Wand (66) befindet.

5. Stoßfänger-Querträger nach irgendeinem der Ansprüche 1 bis 4, **dadurch gekennzeichnet, dass** die allgemeine Form des Strangpressprofils rechteckig ist.

6. Stoßfänger-Querträger nach irgendeinem der Ansprüche 1 bis 5, **dadurch gekennzeichnet, dass** er im Wesentlichen symmetrisch zur Symmetrieebene des Fahrzeugs (Y) angeordnet und insgesamt in einer Richtung (T) senkrecht zur Symmetrieebene (Y) orientiert ist, und dass er zwei Befestigungsbereiche (3) zum Verbinden mit zwei Stützteilen (4) der Fahrzeugstruktur aufweist, die symmetrisch zur Symmetrieebene (Y) angeordnet sind.

7. Stoßfänger-Querträger nach irgendeinem der Ansprüche 1 bis 6, **dadurch gekennzeichnet, dass** sich der Querschnitt des Strangpressprofils gemäß einer monotonen Funktion des Abstands zur Symmetrieebene (Y) über den größten Teil seiner Länge zwischen den Befestigungsbereichen (3) ändert.

8. Stoßabsorbierende Struktur für Kraftfahrzeuge mit einem Querträger nach irgendeinem der Ansprüche 1 bis 7.

9. Stoßabsorbierende Struktur nach Anspruch 8, **dadurch gekennzeichnet, dass** der Querträger (6) über Stoßdämpfer (7) mit der Kraftfahrzeugstruktur (4) verbunden ist.

## Claims

1. Bumper cross beam (6) for vehicles comprising an extruded profile of aluminium alloy which can be fixed to the vehicle and has walls, a front wall (63) and a rear wall (64) which are spaced a certain distance, and a pair of transverse walls (65, 66), which join said front and rear walls to form a hollow section and a spacer (67) arranged between the transverse walls connecting said front and rear walls and dividing the hollow profile into two chambers, an upper chamber (62) and a lower chamber (61) that extend between the walls, where the section of one of said chambers is larger than the section of the other chamber; said front wall closing the chamber of which the section is the largest (631 or 632) is offset horizontally in the direction of the obstacle relative to the portion of said front wall closing the chamber of which the section is the smallest (632 or 631); characterised and in that the ratio between the height H of said cross beam and said horizontal offset Δ is between 10 and 50.

2. Cross beam according to claim 1 **characterised in that** said horizontal offset is substantially located at the level of said spacer (67).

3. Bumper cross beam according to claim 1 or claim 2 **characterised in that** the ratio between the height H of said cross beam and said horizontal offset Δ is between 15 and 30.

4. Bumper cross beam according to any of claims 1 to 3 **characterised in that** said spacer (67) is located at about midway between said upper wall (65) and said lower wall (66).

5. Bumper cross beam according to any of claims 1 to 4 **characterised in that** the general shape of said extruded profile is rectangular.

6. Bumper cross beam according to any of claims 1 to 5 **characterised in that** it is substantially symmetrical with respect to the plane of symmetry of the vehicle (Y) and globally oriented in a direction (T) perpendicular to the plane of symmetry (Y), and **in that** it comprises two fastening zones (3) intended to be connected to two of the support portions (4) of the structure of the automobile, which are arranged symmetrically with respect to the plane of symmetry (Y).

7. Bumper cross beam according to any of claims 1 to 6 **characterised in that** the cross section of said extruded profile varies according to a monotonic function of the distance with respect to the plane of symmetry (Y), over most of the length thereof between said fastening zones (3).

8. Structure for absorbing shocks for a motor vehicle comprising a cross beam according to any of claims 1 to 7.

9. Structure for absorbing shocks according to claim 8 **characterised in that** said cross beam (6) is connected to said structure automobile (4) by shock absorbers (7).
